# EUROPEAN PATENT APPLICATION

(11) **EP 4 362 060 A1**
(43) Date of publication of application: **01.05.2024**
(21) Application number: 23205520.2
(22) Date of filing: 24.10.2023
(51) Int. Cl.: H01J 49/04, H01J 49/24, H01J 49/00, H01J 49/06

(54) **MASS SPECTROMETER**

(30) Priority: 28.10.2022 JP 2022172967
(71) Applicant: Shimadzu Corporation, Nakagyo-ku, Kyoto-shi, Kyoto 604-8511 (JP)
(72) Inventor: MATSUSHITA, Tomoyoshi, Nakagyo-ku, Kyoto-shi, 604-8511 (JP)
(74) Representative: Müller-Boré & Partner Patentanwälte PartG mbB

(57) **Abstract**

Provided is a mass spectrometer including a vacuum chamber containing a cell used for causing ions originating from a sample to come in contact with a predetermined gas supplied from a gas supplier (20), which includes a three-way valve (204) configured to selectively send the gas into either a first passage (22) for sending the predetermined gas to the cell or a second passage (23) for discharging the gas into vacuum state. The mass spectrometer also includes a controller configured to control the three-way valve so as to send the gas into the second passage during an analysis period in which ions are not caused to come in contact with the gas within the cell and/or during a non-analyzing period, as well as to send the gas into the first passage during an analysis period in which ions are caused to come in contact with the gas within the cell.

## Description

### TECHNICAL FIELD

The present invention relates to a mass spectrometer, and more specifically, to a mass spectrometer including a cell used for causing ions originating from a sample component to come in contact with a predetermined gas.

### BACKGROUND ART

An inductively coupled plasma mass spectrometer (which is hereinafter abbreviated as an "ICP-MS") employing an inductively coupled plasma ("ICP") ion source is frequently used in applications in which a plurality of kinds of metal contained in trace amounts in a sample liquid should be simultaneously analyzed. In a common type of ICP-MS, ions generated from sample components in the ICP ion source are drawn from an ambience of atmospheric pressure and sent through a sampling cone or similar element acting as an ion intake into a chamber whose inside is maintained in vacuum state. The ions taken into the chamber are accelerated by a DC electric field and introduced into a collision cell. The ions introduced into the chamber include not only the ions originating from the components (elements) to be observed, but also unwanted interfering ions generated due to various factors. Examples of the interfering ions include ions originating from argon or similar gas used for generating plasma in the ICP ion source, as well as ions originating from foreign substances contained in the sample liquid or from additives (e.g., nitric or hydrochloric acid) added to the sample liquid. The collision cell has the function of separating those interfering ions from the target ions (see Patent Literature 1 or 2, or other related documents).

For example, helium gas (or a different kind of inert gas) is supplied into the collision cell. The various kinds of ions introduced into the collision cell repeatedly come in contact with the helium gas. Through every contact with the gas, the kinetic energy possessed by the ions decreases. In many cases, an interfering ion consists of multiple atoms and has a larger collision cross section than the target ion of a comparable mass. Therefore, the interfering ion comes in contact with the helium gas a greater number of times and loses more kinetic energy than the target ion. Accordingly, the interfering ion can be separated from the target ion and removed, by creating, at the exit of the collision cell, a potential barrier which allows ions whose kinetic energy is equal to or higher than a predetermined value to pass through while blocking ions whose kinetic energy is lower than the predetermined value. This type of technique for separating and removing ions is called "kinetic energy discrimination" (KED).

Another method which is different from the KED employs the charge transfer or similar reaction to separate the target ion from an interfering ion having the same mass as the target ion within the collision cell. In that case, an active reaction gas, such as hydrogen or ammonia, is supplied into the collision cell in place of the inert gas. A specific interfering ion introduced into the collision cell comes in contact with the reaction gas, causing an electron transfer, proton transfer or similar reaction, to be transformed into a neutral particle or another kind of ion having a different mass-to-charge ratio (m/z). The neutral particle is dissipated to the outside of the collision cell, without being captured by the radio-frequency electric field created by the ion guide located within the collision cell. The interfering ion whose m/z has changed, or an ion originating from this ion, is separated from the target ion in a quadrupole mass filter or similar mass separator in the subsequent stage. Thus, the interfering ion can be separated from the target ion and removed.

When a reaction gas is used in the previously described manner, the collision cell may also be called the "reaction cell". When both the KED and the method which uses a reaction gas are employed, the collision cell may also be called the "collision reaction cell". In the present description, all of these cells are called the collision cell.

### CITATION LIST

### PATENT LITERATURE

Patent Literature 1: WO 2018/055707 A
Patent Literature 2: JP 2020-91988 A

### SUMMARY OF INVENTION

### TECHNICAL PROBLEM

Although the previously described removal of the interfering ion in the collision cell works effectively, the target ion can also be partially lost through contact with the gas, which may possibly cause the problem of a decrease in measurement sensitivity for the target ion. This problem becomes particularly noticeable when the mass of the target ion is small. To address this problem, ICP-MSs are normally operated to turn on and off the supply of gas in such a manner that a "with-gas analysis", in which the interfering ion is removed by the KED or similar method by supplying the collision cell with gas, is performed when an atomic ion having a medium to high mass is the measurement target or when the amount of target ions is comparatively large, while a "no-gas analysis", in which the measurement sensitivity is given priority by stopping the supply of gas to the collision cell, is performed when an atomic ion having a low mass is the measurement target or when importance should be assigned to the measurement sensitivity (see Patent Literature 1).

Although the supply of gas to the collision cell is stopped in the no-gas analysis, simply stopping the flow of gas may possibly allow the air to leak into the tubes through the joint of the tubes or the sealed area of a valve. The mixture of the air into the helium gas within the tubes is undesirable since the purity of the used helium gas significantly affects the accuracy of the analysis by the ICP-MS employing the KED. Accordingly, a conventionally known device including a gas supply passage for supplying gas to the collision cell is provided with a purge passage branched from the gas supply passage on the upstream side of an open/close valve provided in the gas supply passage. In the no-gas analysis, the open/close valve provided in the gas supply passage is closed, while an open/close valve provided in the purge passage is opened to let the helium gas flow into the ambient air and thereby reduce the contamination of the helium gas within the tubes (as well as the contamination of the inner wall of the passage). When the helium gas is discharged through the purge passage into the ambient air, the gas flow rate is increased to the highest possible level (normally, to the maximum flow rate) to assuredly avoid leakage of the air through the purge passage.

For the switching from the no-gas analysis to the with-gas analysis in this type of ICP-MS, a valve control for avoiding the contamination via the purge passage is performed in which the open/close valve on the purge passage is closed before the open/close valve on the gas supply passage is opened to initiate the supply of the helium gas to the collision cell. When this open/close valve is opened to initiate the gas supply to the collision cell, the compressed gas remaining within the passage until that point in time is suddenly released into the collision cell, i.e., into the vacuum chamber. This causes a temporary drop of the degree of vacuum within the vacuum chamber. This drop of the degree of vacuum may possibly cause electric discharge due to the high voltages applied to the quadrupole mass filters and other ion optical elements as well as the ion detector and other related devices contained within the vacuum chamber. The sudden drop in the degree of vacuum can also cause the burning of an ion gauge installed within the chamber for measuring the degree of vacuum.

Taking these problems into account, the aforementioned conventional ICP-MS is configured so that the application of the high voltages to the related elements and the operation of the ion gauge are temporarily discontinued for the switching from the no-gas analysis or non-analyzing state ("standby state") to the with-gas analysis. This type of control not only gives rise to an analysis-waiting time due to the discontinued operation but also requires an additional analysis-waiting time from the resumption of the application of the high voltages until the voltage values are stabilized. Therefore, a longer period of time will be required for the entire analysis, which causes a decrease in the analysis efficiency.

The present invention has been developed to solve the previously described problems. One of its objectives is to provide a mass spectrometer which can decrease the period of time required for the switching from the no-gas analysis or non-analyzing state to the with-gas analysis and thereby improve the analysis efficiency.

### SOLUTION TO PROBLEM

One mode of the mass spectrometer according to the present invention is a mass spectrometer including: a vacuum chamber; a cell located within the vacuum chamber, for causing an ion originating from a sample to come in contact with a predetermined gas; and a mass spectrometry unit configured to perform a mass spectrometric analysis of an ion ejected from the cell or an ion originating from the ejected ion, the mass spectrometer further including:
a gas supplier including a three-way valve configured to receive a predetermined gas supplied from a gas supply source and selectively send the predetermined gas into either a first passage for sending the predetermined gas to the cell or a second passage for discharging the predetermined gas into vacuum state; and
a controller configured to control the switching of the three-way valve so as to send the predetermined gas into the second passage during a period of time where an analysis is performed in which ions are not caused to come in contact with the predetermined gas within the cell and/or a period of time where no analysis is performed, as well as to send the predetermined gas into the first passage during a period of time where an analysis is performed in which ions are caused to come in contact with the predetermined gas within the cell.

### ADVANTAGEOUS EFFECTS OF INVENTION

The previously described mode of the mass spectrometer according to the present invention can prevent the situation in which a large amount of gas instantaneously flows into the vacuum chamber and causes a sudden drop in the degree of vacuum within the chamber when the system is switched from a no-gas analysis to a with-gas analysis and/or when a with-gas analysis is initiated from a non-analyzing state. Accordingly, it is unnecessary to perform a precautionary control, such as a temporary discontinuation of applied voltages, so that the analysis-waiting time can be significantly decreased or almost eliminated. Consequently, the period of time required for the entire analysis can be decreased, and the analysis efficiency can be improved.

### BRIEF DESCRIPTION OF DRAWINGS

Fig. 1 is a schematic configuration diagram of an ICP-MS as one embodiment of the present invention.
Fig. 2 is a schematic passage configuration diagram of a gas supplier in the ICP-MS according to the present embodiment.
Fig. 3 is a diagram schematically showing the sequence for the switching from a no-gas analysis to a with-gas analysis in the ICP-MS according to the present embodiment.
Fig. 4 is a schematic passage configuration diagram of one example of a gas supplier in a common type of ICP-MS.
Fig. 5 is a diagram showing a schematic sequence for the switching from a no-gas analysis to a with-gas analysis in the ICP-MS having the gas supplier shown in Fig. 4.

### DESCRIPTION OF EMBODIMENTS

An ICP-MS as one embodiment of the present invention is hereinafter described with reference to the attached drawings.

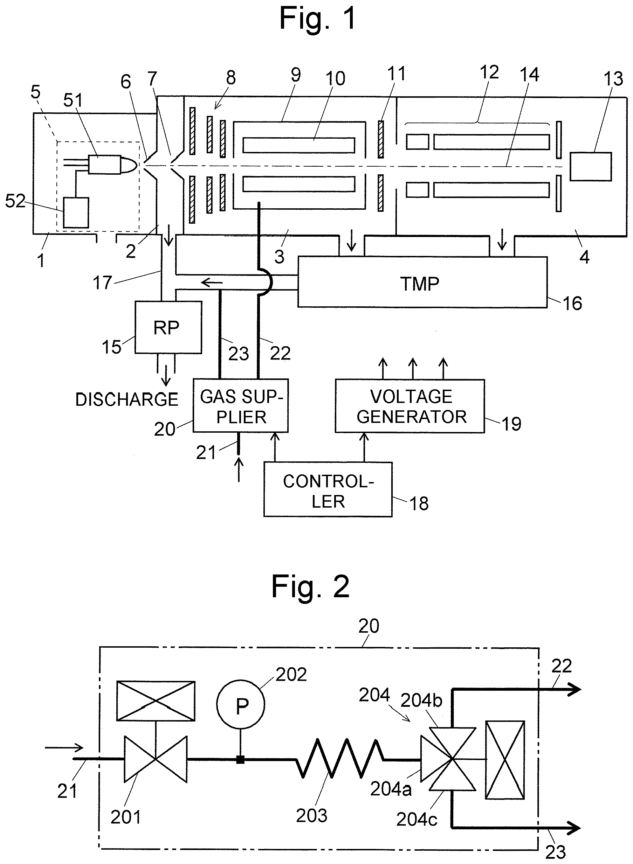

Fig. 1 is a schematic configuration diagram of the ICP-MS according to the present embodiment.

This ICP-MS includes an ionization chamber 1 at substantially atmospheric pressure, as well as a first vacuum chamber 2, second vacuum chamber 3 and third vacuum chamber 4 having their degrees of vacuum sequentially increased from the ionization chamber 1. The first vacuum chamber 2 is evacuated with a rotary pump (RP) 15, while the second and third vacuum chambers 3 and 4 are evacuated with the rotary pump 15 and a turbo molecular pump (TMP) 16, respectively.

Within the ionization chamber 12, an ICP ion source 5 is provided, which includes a plasma torch 51 having three tubes: a sample tube which a liquid sample atomized by a nebulizer gas passes through, a plasma gas tube formed around the sample tube, and a cooling gas tube formed around the plasma gas tube. At the entrance end of the sample tube of the plasma torch 51, an autosampler 52 for introducing a liquid sample into the plasma torch 51 is provided. Additionally, though not shown, a nebulizer gas supply source for supplying the nebulizer gas is connected to the sample tube, a plasma gas supply source for supplying the plasma gas (e.g., argon gas) is connected to the plasma gas tube, and a cooling gas supply source for supplying the cooling gas is connected to the cooling gas tube.

The first vacuum chamber 2 is formed between a substantially conical sampling cone 6 and a skimmer 7 which is also substantially conical. Both the sampling cone 6 and the skimmer 7 have an ion passage hole at their respective apexes. The first vacuum chamber 2 functions as the interface for receiving ions supplied from the ICP ion source 5 and sending them to the subsequent stage while discharging the solvent gas and other unnecessary particles.

The second vacuum chamber 3 contains an ion lens 8 including a drawing electrode, a collision cell 9, and an energy-barrier-forming electrode 11 sequentially arranged from the skimmer 7, i.e., from the side where ions enter the chamber. Both the ion lens 8 and the energy-barrier-forming electrode 11 are a disk-shaped electrode having a substantially circular opening for allowing ions to pass through. The collision cell 9 contains a multipole ion guide 10 including a plurality of rod electrodes arranged parallel to an ion beam axis 14.

The third vacuum chamber 4 in the last stage contains a quadrupole mass filter 12 including pre-rod electrodes and main electrodes, as well as an ion detector 13.

Although the ion beam axis 14 in this ICP-MS linearly extends from the first vacuum chamber 2 through the third vacuum chamber 4, it may alternatively have the configuration of an off-axis ion optical system.

A gas supplier 20 is configured to supply a collision gas or reaction gas into the collision cell 9 through a gas introduction passage 22 whose exit end is open to the inside of the collision cell 9. The collision gas is helium, for example, while the reaction gas is a reactive gas, such as hydrogen or ammonia. A voltage generator 19 is configured to generate voltages to be applied to the quadrupole mass filter 12, ion detector 13 and other related units. A controller 18 is configured to control the operations of the voltage generator 19, gas supplier 20 and other related units. It should be noted that some units are omitted in Fig. 1, such as a data processor for converting signals obtained with the ion detector 13 into digital data and processing those data.

An operation for performing a with-gas analysis employing the KED in the ICP-MS according to the present embodiment is hereinafter schematically described.

In the case of the with-gas analysis, the gas supplier 20 according to the control of the controller 18 supplies helium gas at a predetermined flow rate through the gas introduction passage 22 into the collision cell 9. The voltage generator 19 supplies the ion lens 8, ion guide 10, energy-barrier-forming electrode 11, quadrupole mass filter 12, ion detector 13 and other related elements with their respective predetermined voltages.

Under the control of the controller 18, a liquid sample from an autosampler 52 is sprayed into the plasma formed at the plasma torch 51 in the ICP ion source 5, whereby the elements contained in the liquid sample are ionized. The ions originating from the sample components generated in the ICP ion source 5 are introduced through the ion passage holes of the sampling cone 6 and the skimmer 7 into the second vacuum chamber 3 along with the unwanted ions originating from the plasma gas or other particles. Those ions are converged by the ion lens 8 and introduced into the collision cell 9.

Within the collision cell 9, each ion repeatedly collides with the helium gas, whereby the kinetic energy possessed by the ion gradually decreases. An ion having a larger collision cross section has a higher chance of collision with the collision gas and undergoes a greater amount of decrease in kinetic energy. Since the collision cross section of an ion originating from the plasma gas or similar particles is normally larger than that of an ion originating from a sample component, the unnecessary ions originating from the plasma gas or similar particles undergo a greater amount of decrease in kinetic energy than the ions originating from the sample components. Therefore, the ions originating from sample components can easily overcome the potential barrier formed by the energy-barrier-forming electrode 11 on the outside at the exit end of the collision cell 9, whereas the unnecessary ions cannot easily overcome the same barrier. Thus, the unwanted ions can be removed, and the ions originating from the sample components can be primarily forwarded to the third vacuum chamber 4.

Among the ions which have entered the third vacuum chamber 4, a kind of ion having a specific m/z corresponding to the voltages applied to the quadrupole mass filter 12 passes through this filter 12, while the other ions are dissipated halfway. The ions which have passed through the quadrupole mass filter 12 reach the ion detector 13. The ion detector 13 produces a detection signal corresponding to the amount of incident ions.

In the case of the no-gas analysis, the helium gas is not supplied from the gas supplier 20 to the collision cell 9, nor is the potential barrier formed by the energy-barrier-forming electrode 11. Therefore, the ions introduced into the collision cell 9 are almost entirely guided into the third vacuum chamber 4, to be subjected to the selection process according to m/z by the quadrupole mass filter 12. Accordingly, in the no-gas analysis, although the interfering ions are not removed, there is practically no loss of the target ions, so that the target ions can be detected with a high level of sensitivity.

Before the description of a detailed passage configuration of the gas supplier 20 in the ICP-MS according to the present embodiment, the passage configuration of a gas supplier in a common type of ICP-MS as well as the related problems are hereinafter described.

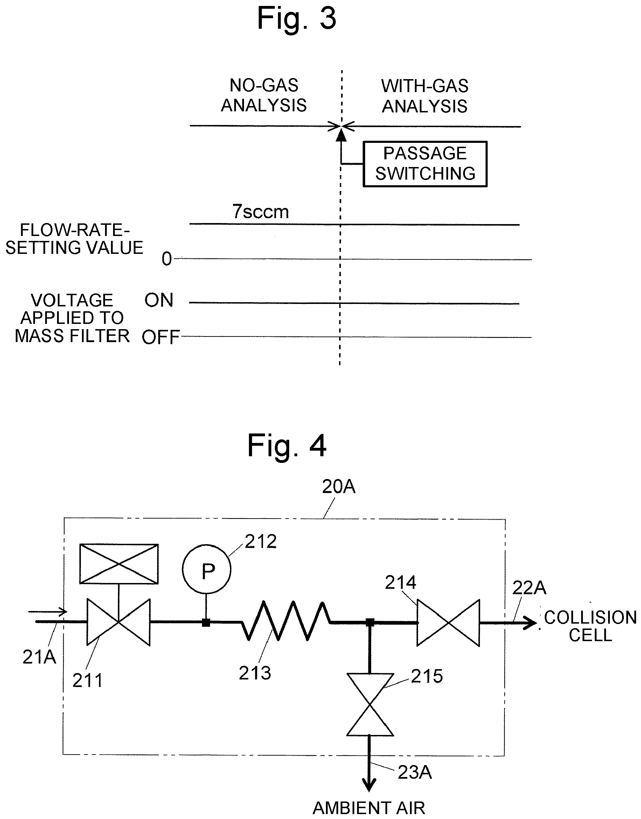

Fig. 4 is a passage configuration diagram of a gas supplier 20A in a common type of ICP-MS.

This gas supplier 20A includes a proportional valve 211, pressure sensor 212, resistance tube 213, and two open/close valves 214 and 215. The proportional valve 211 is a valve whose degree of opening can be almost continuously adjustable. The open/close valves 214 and 215 are simple on/off valves.

The gas (e.g., helium) supplied from the gas supply source (not shown) through the gas supply passage 21A has its flow rate adjusted by the proportional valve 211 and flows through the resistance tube 213. The pressure sensor 212 detects the gas pressure within the line after the flow-rate adjustment. During the with-gas analysis, the first open/close valve 214 provided in the gas introduction passage 22A is opened, while the second open/close valve 215 provided in the purge passage 23A is closed, so as to supply the helium gas through the first open/close valve 214 and the gas introduction passage 22A to the collision cell. On the other hand, during the no-gas analysis, the second open/close valve 215 is opened, while the first open/close valve 214 is closed, so as to release the helium gas through the second open/close valve 215 and the purge passage 23A into the ambient air.

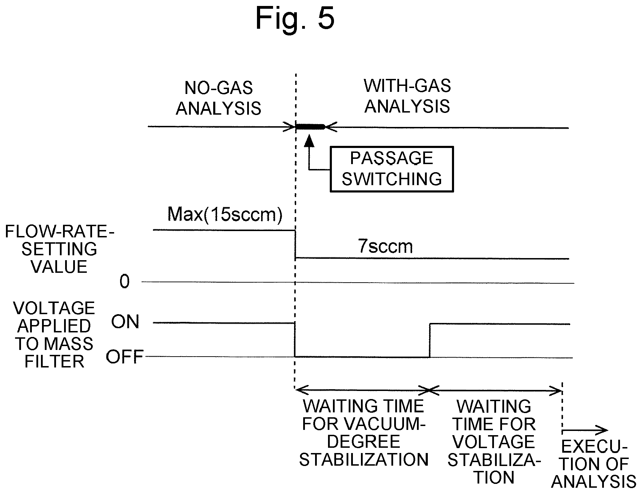

Fig. 5 is a schematic timing chart showing the control sequence for the switching from a no-gas analysis to a with-gas analysis in the ICP-MS having the gas supplier 20A shown in Fig. 4.

The flow-rate-setting value in Fig. 5 is the setting value of the flow rate of the proportional valve 211. During a no-gas analysis or non-analyzing period, this value is set at the maximum flow rate corresponding to the highest degree of opening of the proportional valve 211 (in the present example, 15 sccm). In other words, in this situation, the helium gas is discharged at the highest flow rate through the second open/close valve 215 and the purge passage 23A into the ambient air. By maximizing the flow rate of the helium gas in this manner, the leakage of the air into the tubes through the joint of the tubes or the sealed area of the valve can be maximally avoided, and the penetration of the air into the collision cell can be prevented.

For the switching from the no-gas analysis to the with-gas analysis, the gas passage is changed by initially closing the second open/close valve 215 and subsequently opening the first open/close valve 214 with a slight delay. The delay period is provided so as to assuredly avoid the situation in which both of the open/close valves 214 and 215 are simultaneously in the open state. This operation for changing the gas passage includes a short yet nonnegligible period of time during which the first and second open/close valves 214 and 215 are both in the closed position. During that period, the gas pressure within the tube between the resistance tube 213 and the first open/close valve 214 increases, so that a high flow rate of helium gas instantaneously flows into the collision cell when the first open/close valve 214 is opened. Consequently, a sudden drop of the degree of vacuum occurs within not only the collision cell but also the entire space within the chamber.

The vacuum chamber contains a quadrupole mass filter, ion detector and other elements. Since high voltages equal to or higher than several kV are applied to those elements, electric discharge may possibly occur when the degree of vacuum is decreased. Furthermore, an ion gauge, which is installed for measuring the degree of vacuum within the chamber, may be burned due to an excessive amount of load. Taking these factors into account, when the system is switched from the no-gas analysis to the with-gas analysis, the application of the high voltages to the quadrupole mass filter (and other related elements) as well as the operation of the ion gauge are discontinued for a predetermined period of time ("waiting time for vacuum-degree stabilization") as shown in Fig. 5. The period of time to discontinue the voltage application is appropriately determined taking into account the period of time required for the sudden increase of the gas flow rate to cease and the degree of vacuum to be sufficiently low. After the completion of that period, the application of the high voltages to the quadrupole mass filter (and other related elements) is resumed. However, a certain period of time is additionally required until the voltages are stabilized after the resumption.

Furthermore, in the with-gas analysis, the flow-rate-setting value of the proportional valve 211 is normally decreased to a level within a range of one third to one half of the maximum flow rate. Therefore, it takes time for the gas flow rate to be settled at the set value after the switching operation. In the with-gas analysis using an ICP-MS, a fluctuation of the flow rate of the helium gas causes a decrease in analysis accuracy. Therefore, it is necessary to consider not only the influence of the decrease in the degree of vacuum but also the period of time required for the gas flow rate to be stabilized. Accordingly, as shown in Fig. 5, a predetermined length of waiting time is additionally secured from the point where the voltage application is resumed to the point where the analysis is actually initiated ("waiting time for voltage stabilization").

For these reasons, at least one minute of analysis waiting time is required from the switching of the gas passage for performing the with-gas analysis until the analysis can be actually initiated, and the period of time required for the entire analysis becomes accordingly longer.

By comparison, in the ICP-MS according to the present embodiment, the passage configuration in the gas supplier 20 (and other related sections) is changed from the conventional configuration. The control sequence for the switching from the no-gas analysis or non-analyzing state to the with-gas analysis is also changed.

Fig. 2 is a schematic passage configuration diagram of the gas supplier 20 in the ICP-MS according to the present embodiment. Fig. 3 is a timing chart showing the control sequence of the switching from a no-gas analysis to a with-gas analysis in the ICP-MS according to the present embodiment.

As shown in Fig. 2, the gas supplier 20 includes a proportional valve 201, pressure senor 202, resistance tube 203 as well as a three-way valve 204 having a common port 204a, first port 204b and second port 204c. Connected to the second port 204c of the three-way valve 204 is a purge passage 23, whose exit end is not open to the ambient air but is connected to an intake-side tube 17 of the rotary pump 15. The intake-side tube 17 connects the intake port of the rotary pump 15 to the first vacuum chamber 2 as well as to the discharge port of the turbomolecular pump 16. The inside of this tube is maintained in vacuum state.

The proportional valve 201, pressure sensor 202 and resistance tube 203 in Fig. 2 are essentially identical to the proportional valve 211, pressure sensor 212 and resistance tube 213 in Fig. 4, respectively. In the with-gas analysis, the controller 18 switches the passage in the three-way valve 204 so that the common port 204a is connected to the first port 204b. The helium gas which has passed through the resistance tube 203 is supplied through the three-way valve 204 and the gas introduction passage 22 to the collision cell 9. In the no-gas analysis, the controller 18 switches the passage in the three-way valve 204 so that the common port 204a is connected to the second port 204c. The helium gas which has passed through the resistance tube 203 is discharged through the three-way valve 204 and the purge passage 23 into the intake-side tube 17, i.e., into the vacuum state.

In summary, the structural features which are different from the gas supplier 20A shown in Fig. 4 exist in that the single three-way valve 204 is provided in place of the two open/close valves 214 and 215, as well as in that the location of the end of the purge passage 23 (23A), or the discharge destination of the gas during the no-gas analysis, is changed from the ambient air to the vacuum state.

In the ICP-MS according to the present embodiment, in the no-gas analysis or non-analyzing period, the controller 18 does not set the flow-rate-setting value of the proportional valve 201 at the maximum flow rate, but at the flow rate value to be used in the with-gas analysis which will be subsequently performed. For example, when the gas flow rate in the with-gas analysis is specified as 7 sccm, the gas flow rate in the no-gas analysis is also set at 7 sccm. In the case where the exit end of the purge passage 23 is in the ambience of atmospheric pressure, it is necessary to supply the gas at the highest possible flow rate in the previously described manner so as to assuredly prevent the leakage of the air into the passage. By comparison, in the present embodiment, since the exit end of the purge passage 23 is in vacuum state, the leakage of the air into the passage can be assuredly prevented even when the gas flow rate is lowered.

For the switching from the no-gas analysis or non-analyzing state to the with-gas analysis, the controller 18 changes the passage in the three-way valve 204 from the second port 204c to the first port 204b. Since the three-way valve 204 is configured to effectively give an either/or choice of the passage, the situation in which the two passages are simultaneously closed does not occur. The switching process occurs smoothly, with only an insignificant increase in gas pressure. Since the gas flow rate in the proportional valve 201 is set at the same value before and after the switching, the fluctuation of the actual gas flow rate due to the switching of the passage is extremely low or practically zero. Due to these features, as shown in Fig. 3, the application of the high voltages to the quadrupole mass filter 12 (and other related elements) can be continued even during the switching process. The ion gauge for measuring the degree of vacuum can also be continuously operated.

Accordingly, after the switching from the no-gas analysis or non-analyzing state to the with-gas analysis, the ICP-MS according to the present embodiment requires only a practically insignificant analysis-waiting time, and therefore, can promptly initiate the analysis and collect data. Therefore, for example, even when the no-gas analysis and the with-gas analysis are alternately and frequently performed, the wasteful analysis-waiting time is barely required, and the period of time required for the entire analysis can be reduced.

In addition to the reduction of the period of time for the entire analysis, the reduced number of valves also allows for a cost reduction. The amount of gas used as the purge gas in the no-gas analysis and the non-analyzing period can also be reduced, which leads to a decrease in the operational cost for the analysis on the user side.

The ICP-MS shown in Fig. 1 is configured to supply the collision cell 9 with a single system of gas. When the interference removal using a reaction gas is also performed in addition to the interference removal by the KED, a gas supplier for supplying the collision cell 9 with one or more kinds of reaction gas to be used (e.g., hydrogen, ammonia and/or oxygen) will also be necessary. In that case, it is preferable that the gas supplier 20, gas supply passage 21, gas introduction passage 22 and purge passage 23 shown in Fig. 1 be provided for each kind of gas to be used. In the configuration with the gas suppliers thus provided in parallel, the decrease in the number of valves will be even more effective for the cost reduction.

Although the previously described embodiment is an example in which the present invention is applied in an ICP-MS, the present invention is also applicable in a triple quadruple mass spectrometer, quadrupole time-of-flight mass spectrometer or other types of mass spectrometers configured to supply a collision gas to a collision cell and thereby cause collision induced dissociation within the collision cell. More generally, the present invention is applicable in a type of mass spectrometer configured to supply a specific kind of gas into a cell, such as a collision cell, located within a vacuum chamber, and to perform an operation on an ion by causing the ion to come in contact with the gas within the cell.

The previously described embodiment and its variations are examples of the present invention and will also evidently fall within the scope of claims of the present application even when any modification, change or addition other than those already described is appropriately made within the spirit of the present invention.

### [Various Modes]

A person skilled in the art can understand that the previously described illustrative embodiment is a specific example of the following modes of the present invention.

(Clause 1) One mode of the mass spectrometer according to the present invention is a mass spectrometer including: a vacuum chamber; a cell located within the vacuum chamber, for causing an ion originating from a sample to come in contact with a predetermined gas; and a mass spectrometry unit configured to perform a mass spectrometric analysis of an ion ejected from the cell or an ion originating from the ejected ion, the mass spectrometer further including:
a gas supplier including a three-way valve configured to receive a predetermined gas supplied from a gas supply source and selectively send the predetermined gas into either a first passage for sending the predetermined gas to the cell or a second passage for discharging the predetermined gas into vacuum state; and
a controller configured to control the switching of the three-way valve so as to send the predetermined gas into the second passage during a period of time where an analysis is performed in which ions are not caused to come in contact with the predetermined gas within the cell and/or a period of time where no analysis is performed, as well as to send the predetermined gas into the first passage during a period of time where an analysis is performed in which ions are caused to come in contact with the predetermined gas within the cell.

In the mass spectrometer according to Clause 1, when an analysis in which ions are not caused to come in contact with gas within the cell ("no-gas analysis") is to be performed, the controller sets the three-way valve so as to send the predetermined gas into the second passage. The predetermined gas supplied from the gas supply source is thereby discharged through the second passage into the vacuum state. When the system is switched from a no-gas analysis to an analysis in which ions are caused to come in contact with gas within the cell ("with-gas analysis"), the controller controls the operation of the three-way valve so as to switch the flow direction of the predetermined gas from the second passage to the first passage. Since this switching operation does not block the flow of the predetermined gas, no accumulation of the compressed gas occurs in the passage on the upstream side of the three-way valve. Thus, the situation in which a large amount of gas instantaneously flows into the cell immediately after the switching of the passage can be avoided.

Additionally, since the destination of the gas discharged through the second passage is not atmospheric ambience but vacuum state, the contamination by the air through the passage is unlikely occur even when the flow rate of the gas supplied through the second passage is low. Therefore, even when the flow rate of the gas supplied to the cell through the first passage in the with-gas analysis is low, the flow rate of the gas to be discharged through the second passage in the no-gas analysis can be as low as the flow rate used in the with-gas analysis. By setting the gas flow rates before and after the switching of the three-way valve so that their difference is zero or extremely small, the period of time required for the gas flow rate to be settled at the target value after the switching operation can be practically zero or extremely short.

The mass spectrometer according to Clause 1 can prevent a decrease in the degree of vacuum within the vacuum chamber due to a high-pressure gas instantaneously flowing into the chamber when the system is switched from a no-gas analysis to a with-gas analysis and/or when a with-gas analysis is initiated from a non-analyzing state. Accordingly, it is unnecessary to perform a special control for avoiding adverse effects due to the decrease in the degree of vacuum, such as a temporary discontinuation of the application of high voltages to a mass separator (or other related elements). Consequently, the waiting time for the system to be practically available for the analysis can be significantly reduced or almost eliminated, so that the period of time required for the entire analysis can be decreased, and the analysis efficiency can be improved.

(Clause 2) In the mass spectrometer according to Clause 1, the gas supplier may include a flow regulator located on a passage between the gas supply source and the three-way valve, and the controller may be configured to control the flow regulator so as to set the gas flow rate at equal levels before and after the three-way valve is switched from the position for sending the predetermined gas into the second passage to the position for sending the predetermined gas into the first passage.

In the mass spectrometer according to Clause 2, the flow rate of the predetermined gas supplied to the cell can be quickly stabilized in the switching operation from the no-gas analysis or non-analyzing state to the with-gas analysis. Therefore, the substantial analysis, i.e., the collection of useful data, can be quickly initiated after the switching.

(Clause 3) In the mass spectrometer according to Clause 1 or 2, the exit end of the second passage may be connected to a passage leading to an intake port of a vacuum pump used for evacuating the vacuum chamber.

The mass spectrometer according to Clause 3 can prevent the degree of vacuum within the vacuum chamber from being influenced by the discharge of the predetermined gas during the no-gas analysis or non-analyzing period.

(Clause 4) The mass spectrometer according to one of Clauses 1-3 may further include an inductively coupled plasma ion source, and the cell may be a collision cell for removing interfering ions.

The mass spectrometer according to Clause 4 can decrease the period of time required for the entire analysis while ensuring a high level of analysis accuracy even when the no-gas analysis and the with-gas analysis are alternately repeated with a high frequency.

### REFERENCE SIGNS LIST

- 1: Ionization Chamber
- 2: First Vacuum Chamber
- 3: Second Vacuum Chamber
- 4: Third Vacuum Chamber
- 5: ICP Ion Source
- 51: Plasma Torch
- 52: Autosampler
- 6: Sampling Cone
- 7: Skimmer
- 8: Ion Lens
- 9: Collision Cell
- 10: Ion Guide
- 11: Energy-Barrier-Forming Electrode
- 12: Quadrupole Mass Filter
- 13: Ion Detector
- 14: Ion Beam Axis
- 15: Rotary Pump
- 16: Turbo Molecular Pump
- 17: Intake-Side Tube
- 18: Controller
- 19: Voltage Generator
- 20: Gas Supplier
- 201: Proportional Valve
- 202: Pressure Sensor
- 203: Resistance Tube
- 204: Three-Way Valve
- 204a: Common Port
- 204b: First Port
- 204c: Second Port
- 21: Gas Supply Passage
- 22: Gas Introduction Passage
- 23: Purge Passage

## Claims

1. A mass spectrometer including: a vacuum chamber; a cell located within the vacuum chamber, for causing an ion originating from a sample to come in contact with a predetermined gas; and a mass spectrometry unit configured to perform a mass spectrometric analysis of an ion ejected from the cell or an ion originating from the ejected ion, the mass spectrometer further comprising:
a gas supplier comprising a three-way valve configured to receive a predetermined gas supplied from a gas supply source and selectively send the predetermined gas into either a first passage for sending the predetermined gas to the cell or a second passage for discharging the predetermined gas into vacuum state; and
a controller configured to control switching of the three-way valve so as to send the predetermined gas into the second passage during a period of time where an analysis is performed in which ions are not caused to come in contact with the predetermined gas within the cell and/or a period of time where no analysis is performed, as well as to send the predetermined gas into the first passage during a period of time where an analysis is performed in which ions are caused to come in contact with the predetermined gas within the cell.

2. The mass spectrometer according to claim 1, wherein:
the gas supplier comprises a flow regulator located on a passage between the gas supply source and the three-way valve; and
the controller is configured to control the flow regulator so as to set a gas flow rate at equal levels before and after the three-way valve is switched from a position for sending the predetermined gas into the second passage to a position for sending the predetermined gas into the first passage.

3. The mass spectrometer according to claim 1, wherein an exit end of the second passage is connected to a passage leading to an intake port of a vacuum pump used for evacuating the vacuum chamber.

4. The mass spectrometer according to claim 1, further comprising an inductively coupled plasma ion source, wherein the cell is a collision cell for removing interfering ions.
